(19) Europäisches Patentamt
European Patent Office
Office européen des brevets

(11) Publication number: **0 661 322 A2**

# (12) EUROPEAN PATENT APPLICATION

(21) Application number: **94203710.2**

(51) Int. Cl.[6]: **C08G 59/14**, C08G 59/22

(22) Date of filing: **21.12.94**

(30) Priority: **21.12.93 JP 344667/93**
**16.06.94 JP 156447/94**

(43) Date of publication of application:
**05.07.95 Bulletin 95/27**

(84) Designated Contracting States:
**BE DE FR GB IT SE**

(71) Applicant: **SHELL INTERNATIONALE RESEARCH MAATSCHAPPIJ B.V.**
**Carel van Bylandtlaan 30**
**NL-2596 HR Den Haag (NL)**

(72) Inventor: **Fukuzawa, Takao, c/o Yuka Shell Epoxy KK, Dep.ADMP**
**Nishiazabu Mitsui Build.,**
**17-30 Nishiazabu 4 chome**
**Minato-ku,Tokyo 106 (JP)**
Inventor: **Imura, Tetsurou, c/o Yuka Shell Epoxy KK, Dep.ADMP**
**Nishiazabu Mitsui Build.,**
**17-30 Nishiazabu 4-chome**
**Minato-ku, Tokyo 106 (JP)**
Inventor: **Murata, Yoshiyuki, c/o Yuka Shell Epoxy KK**
**Dep.ADMP,**
**Nishiazabu Mits.Build.,17-30 Nishiazabu 4 chome,**
**MiNATO-KU, TOKYO 106 (JP)**
Inventor: **Nakanishi, Yoshinori, c/o Yuka Shell Epoxy KK,**
**Dep.ADMP,**
**Nishiazabu Mits.Build.,**
**17-30 Nishiazabu 4-chome,**
**Minato-ku, Tokyo 106 (JP)**
Inventor: **Ohta, Masayuki,c/o Yuka SHell Epoxy KK, Dep. ADMP**
**Nishiazabu Mitsui Build.,**
**17-30 Nishiazabu 4-chome**
**Minato-ku, Tokyo 106 (JP)**
Inventor: **Tohriiwa, Norio, c/o Yuka Shell Epoxy KK, Dep.ADMP**
**Nishiazabu Mitsui Build.,**
**17-30 Nishiazabu 4-chome**
**Minato-ku, Tokyo 106 (JP)**

## (54) Modified polyepoxy compound, process for producing the compound, and epoxy resin composition.

(57) A modified polyepoxy compound obtained by etherifying a secondary hydroxyl group of a polyepoxy compound having an alcoholic secondary hydroxyl group, such as a polyepoxy compound obtained by reaction of a bifunctional phenol compound and an epihalohydrin, or a polyepoxy compound obtained by reaction of a bifunctional phenol type epoxy compound and a bifunctional phenol compound, and an epoxy resin composition using the modified polyepoxy compound as the epoxy resin. Further, a modified brominated polyepoxy compound obtained by etherifying a secondary hydroxyl group of a polyepoxy compound having an alcoholic secondary hydroxyl group obtained by reaction of a polyepoxy compound which does not substantially contain a halogen atom and a polyhydric phenol compound having at least one bromine atom directly bonded to an aromatic ring per one molecule, and an epoxy resin composition for semiconductor encapsulation having blended therewith the modified brominated polyepoxy compound as the flame retardant.

EP 0 661 322 A2

The present invention relates to a modified polyepoxy compound, a process for producing the compound, and an epoxy resin composition containing the compound. In particular, the modified polyepoxy compound of the present invention can provide a cured epoxy resin having excellent heat resistance and moisture resistance, and is advantageously used as a coating composition, a powder coating composition, a moulding material, a casting material, a laminating material, a composite material, an adhesive, and an encapsulating material for a semiconductor, or the like. Further, of the modified polyepoxy resins of the present invention, a modified brominated polyepoxy resin is excellent as a flame retardant for various resins including an epoxy resin.

Since an epoxy resin is excellent in properties such as mechanical characteristic, heat resistance, electrical characteristic, resistance to chemicals, and adhesive property, it is widely used as a coating composition, a moulding material, a casting material, a laminate board for printed substrate, an encapsulating material for semiconductor or the like, an insulating powder coating composition, an insulating varnish, an adhesive, and the like.

As the epoxy, resin used in these fields, for example, bisphenol A type epoxy resin, bisphenol F type epoxy resin, tetrabromobisphenol A type epoxy resin, flame-retardant epoxy resin obtained by reacting tetrabromobisphenol A with liquid bisphenol A type epoxy resin, and the like are generally used. However, these general-purpose epoxy resins generally contain an alcoholic secondary hydroxyl group having a strong polarity represented by the following structural formula

$$-OCH_2-\underset{\displaystyle OH}{\underset{|}{C}}HCH_2-O-$$

in the skeleton of the resin molecule, and therefore have excellent adhesive property, but have a defect to give a cured resin having poor moisture resistance.

In particular, with the recent technical progress of electric and electronic instruments, epoxy resins used in those instruments are required to meet severer requirements to various characteristics, particularly moisture resistance.

Recently, the flame retardancy of a polymeric material is also an important problem, and its standardization is provided in JIS, standards for automobile products, standards for electric products, UL standard, and the like.

There are various materials as a flame retardant for a polymeric material, but a brominated epoxy resin is widely used as a flame retardant for various synthetic resins such as an epoxy resin, a phenol resin, a polystyrene resin, and an ABS resin from the points of a compatibility and reactivity with a base resin, and that it does not deteriorate physical properties of the base resin.

However, a brominated epoxy resin obtained by the reaction of tetrabromobisphenol A or a brominated phenol novolak with an epihalohydrin, which are commercially available, have a low thermal decomposition temperature such as 230 to 250 °C, and a large amount of hydrogen bromide gas or bromine gas are generated at the thermal decomposition thereof.

Ionic impurities which cause an aluminum wiring corrosion in a moisture resistance reliability test of a resin for encapsulation are sodium ion, chloride ion, bromide ion and the like. Among them, sodium ion and chloride ion can be reduced to a level which does not substantially cause problem in the moisture resistance reliability, by a production process, purification, or the like of starting materials. However, the above-mentioned brominated epoxy resin obtained by the reaction of tetrabromobisphenol A or brominated phenol novolak with epihalohydrin, which are the conventional bromine type flame retardant, are poor in a thermal stability, and are decomposed by heating at molding or solder reflowing and tend to generate bromide ion.

Japanese Laid-Open Patent Application. No. 3-157417 describes a brominated epoxy resin produced from a brominated polycarbonate oligomer, as a brominated epoxy resin having a good thermal stability, but the thermal stability thereof is not yet sufficient.

Further, Japanese Laid-Open Patent Application No. 5-39345 describes an epoxy resin containing phosphorus atom, as a flame retardant other than the brominated epoxy resin. However, a resin moulding material for encapsulation using the epoxy resin containing phosphorus atom as a flame retardant does not have a sufficient flame retardancy, and is poor in heat resistance or moisture resistance. Therefore, it was difficult to actually use the epoxy resin.

An object of the present invention is to provide a modified polyepoxy compound which gives a cured resin having particularly excellent moisture resistance, a process for producing the compound, and an epoxy composition containing the compound. Further, another object of the present invention is to provide a modified brominated polyepoxy compound which is useful as a flame retardant for various resins including an epoxy resin, and a flame retardant epoxy resin composition using the compound as a flame retardant, particularly a flame retardant epoxy resin composition for a semiconductor encapsulation.

The modified polyepoxy compound of the present invention is a modified polyepoxy compound obtainable by modification of a polyepoxy compound having in the molecule an alcoholic secondary hydroxyl group represented by the following structural formula,

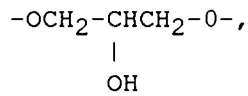

characterized in that the polyepoxy compound has been modified by etherifying the alcoholic secondary hydroxyl group.

The representative production processes for obtaining the polyepoxy compound having the alcoholic secondary hydroxyl group to be etherified in the present invention are (1) a process for producing a polyepoxy compound by reacting a bifunctional phenol type epoxy compound and a bifunctional phenol compound, if necessary, in the presence of other polyepoxy compound and/or other polyhydric phenol compound, and (2) a process for producing a polyepoxy compound by reacting a bifunctional phenol compound and epihalohydrin, if necessary, in the presence of other polyhydric phenol compound.

Representative examples of the bifunction phenol compound used in the above-mentioned production process (1) of the polyepoxy compound, or the bifunctional phenol compound used in the above production process (2) of the polyepoxy compound are bifunctional phenol compounds represented by one of the following general formulae (I) to (V)

Bifunctional phenol compound represented by the following formula (I):

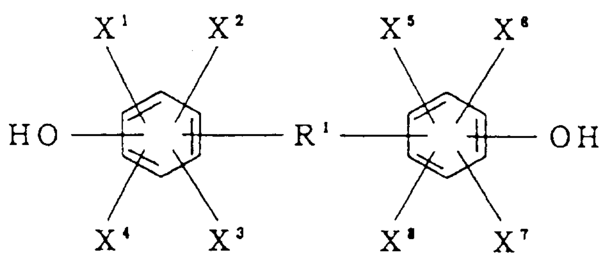

(I)

wherein $X^1$ to $x^1$ each represents hydrogen atom, a hydrocarbon group having 1 to 20 carbon atoms, an alkoxy group, an alloxy group or a halogen atom; and $R^1$ represents a direct bond, a hydrocarbon group having 1 to 20 carbon atoms, -O-, -S-, -S-S-, -S(=O)-, -(O=)S(=O)-, -C(=O)-, -C(=O)-O-, -OC(=O)-O-, -(O=)C-C(=O)-, -NHC(=O)- or -NHC(=O)-O-.

Specific examples of the bifunctional phenol compound represented by the general formula (I) are bisphenol A, bisphenol F, bisphenol E, bisphenol Z, bisphenol AP, bisphenol S, tetramethylbisphenol A, tetramethylbisphenol F, tetra-t-butylbisphenol A, 4,4'-methylenebis(2,6-di-t-butylphenol), 2,2'-methylenebis-(4,6-di-t-butylphenol), tetramethylbisphenol S, tetrabromobisphenol A, tetrabromobisphenol F, biphenol, tetramethylbiphenol, tetra-t-butylbiphenol, bisphenol C, 4,4'-ethylenebis(3-methyl-6-t-butylphenol), dihydroxydiphenyl ether, dihydroxydiphenyl thioether, dihydroxybenzophenone, tetrabromobisphenol S, 2,2'-isobutylidenebis(4,6-dimethylphenol), bisphenol AF, bis-hydroxyphenyl)fluorene, 1,3-bis(hydroxycumyl)-benzene, 1,4-bis(hydroxycumyl)benzene, diphenylbis(4-hydroxyphenyl)methane, 1,4-bis(3,5-dimethyl-4-hydroxycumyl)benzene, 4,4'-butylidenebis (6-t-butyl-3-methylphenol), tetramethylbisphenol Z, 4,4-[1,3phenylenebis(1-methyl ethylidene)]bis[2,6-dimethyl]phenol, 4,4'-[1,3-phenylenebis-(1-methylethylidene)]-bis[2-t-butyl-5-methyl]phenol, and 4,4'-[1,3-phenylenebis- (1-methylthylidene)]bis (2-cyclohexyl-5-methylphenol).

Other specific examples of the phenol compound represented by the general formula (I) are various bifunctional phenol compounds other than the above-mentioned compounds, wherein in the general formula

(I), $R^1$ is methylene, ethylidene, α-methylbenzylidene, cyclohexylidene, isopropylidene, butylidene, p-xylene-α,α'-diyl, or fluorene-9-ylidene, or $R^1$ is a divalent hydrocarbon group formed when adding phenols to dicyclopentadiene or a cyclic terpene compound (e.g., limonene, terpinolene, pinene, terpinene or menthadiene) , or $R^1$ is -O-, -S-, -S-S-, -S(=O)-, -(O=)S(=O)-, -C(=O)-, -C(=O)-O-, -OC(=O)-O-, -(=O)C-C(=O)-, -NHC(=O)- or -NHC(=O)-O-, and $X^1$ to $X^8$ each is hydrogen atom, a hydrocarbon group having 1 to 20 carbon atoms, an alkoxy group, an alloxy group or a halogen atom.

Bifunctional phenol compound represented by the following general formula (II):

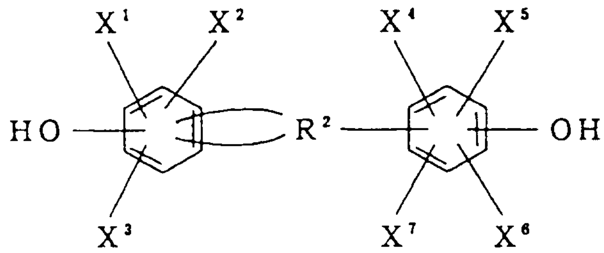

(II)

wherein $X^1$ to $X^7$ each represents hydrogen atom, a hydrocarbon group having 1 to 20 carbon atoms, an alkoxy group, an alloxy group or a halogen atom, and $R^2$ represents a trivalent hydrocarbon group having 1 to 20 carbon atoms or a trivalent hydrocarbon group containing an intermediate ether bond and having 2 to 20 total carbon atoms.

Specific example of the bifunctional phenol compound represented by the above-mentioned general formula (II) is a compound represented by, for example, the following structural formula.

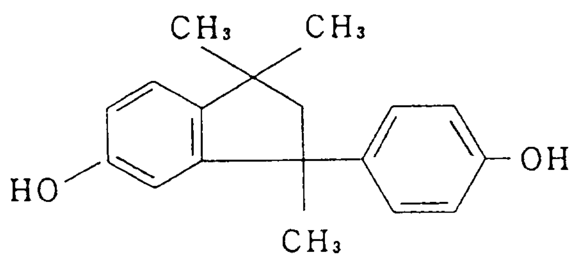

Bifunctional phenol compound represented by the following general formula (III):

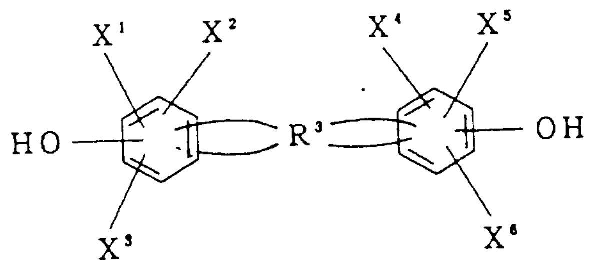

(III)

wherein $X^1$ to $X^8$ each represents hydrogen atom, a hydrocarbon atom having 1 to 20 carbon atoms, an alkoxy group, an alloxy group or a halogen atom, and $R^3$ represents a tetravalent hydrocarbon group having 1 to 20 carbon atoms, or a tetravalent hydrocarbon group containing an intermediate ether bond and having 2 to 20 total carbon atoms.

Specific examples of the bifunctional phenol compound represented by the above-mentioned general formula (III) are compounds represented by the following two structural formulae.

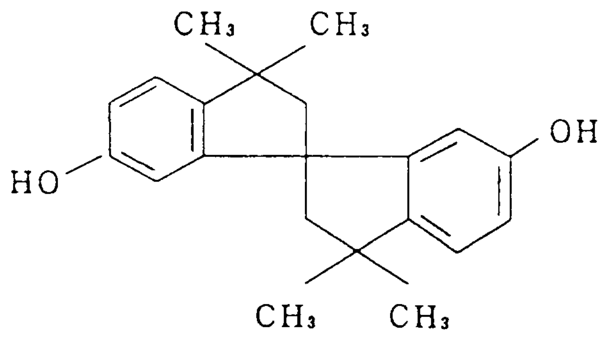

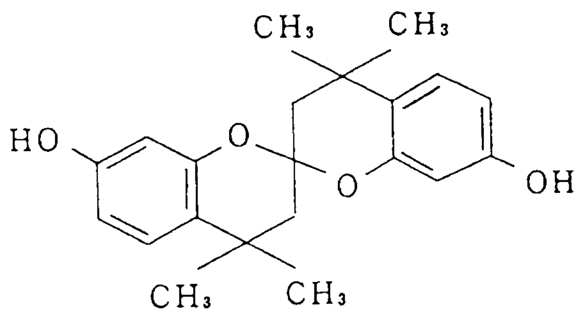

Bifunctional phenol compound represented by the following general formula (IV):

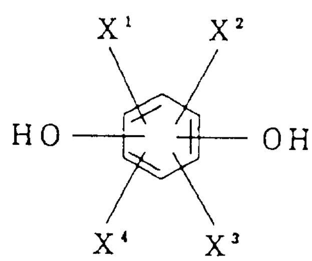

(IV)

wherein $X^1$ to $X^4$ each represents hydrogen atom, a hydrocarbon group having 1 to 20 carbon atoms, an alkoxy group, an alloxy group or a halogen atom.

Specific examples of the bifunctional phenol compound represents by the above-mentioned general formula (IV) are hydroquinone, resorcinol, catechol, methylhydroquinone, 2,5-dimethylhydroquinone, 2-6-dimethylhydroquinone, trimethylhydroquinone, tetramethylhydroquinone, t-butylhydroquinone, 2,5-di-t-butylhydroquinone, 2-ethyl-5-methylhydroquinone, isopropylhydroquinone,2-methylresorcinol, 5-methylresorcinol, 4-bromoresorcinol, 5-methoxyresorcinol, 2,4,6-trimethylresorcinol, 4-cumylresorcinol, 2,5dipropylhydroquinone, 2-propyl-3,5,6-trimethylhydroquinone, cumylhydroquinone, 2,5-di-t-hexylhydroquinone, and the like.

Bifunctional phenol compound represented by the following general formula (V):

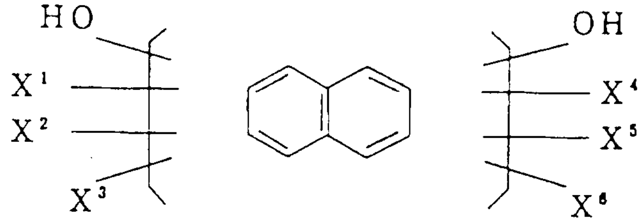

(V)

wherein $X^1$ to $X^6$ each represents hydrogen atom, a hydrocarbon group having 1 to 20 carbon atoms, an alkoxy group, an alloxy group or a halogen atom.

Specific examples of the bifunctional phenol compound represented by the above-mentioned general formula (V) are 1,2-dihydroxynaphthalene, 1,3-dihydroxynaphthalene, 1,4-dihydroxy naphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, 2,7-dihydroxynaphthalene, 1,5-dihydroxy-7-methylnaphthalene, 1,6 dihydroxy-2-methylnaphthalene, 1,6-dihydroxy-8-methylnaphthalene, 1,6-dihydroxy-4,8-dimethylnaphthalene, 2-bromo-1,6-dihydroxy naphthalene, 8-bromo-1,6-dihydroxynaphthalene, and the like.

Further, the bifunctional phenol type epoxy compound used in the above-mentioned production process (1) of the polyepoxy compound is an epoxy compound obtained by reacting epihalohydrin with at least on bifunctional phenol compound selected from the compounds of the above-mentioned general formulae (I) to (V).

The polyepoxy compound obtained by the above-mentioned production process (1) or production process (2) generally contains at least one alcoholic secondary hydroxyl group (hereinafter sometimes referred to as "secondary hydroxyl group").

That is, a polyepoxy compound obtained by the reaction of, for example, a bifunctional phenol type epoxy compound obtained by the reaction of bisphenol A and epihalohydrin, and tetrabromobisphenol A according to the above-mentioned production (1) is a compound represented by the following structural formula (VI), and a polyepoxy compound obtained by the reaction of a bifunctional phenol type epoxy compound obtained by the reaction of 3,3',5,5'-tetramethyl-4,4'biphenol and epihalohydrin, and tetrabromobisphenol A is a compound represented by the following structural formula (VII). As shown in each structural formula, the secondary hydroxyl group is contained.

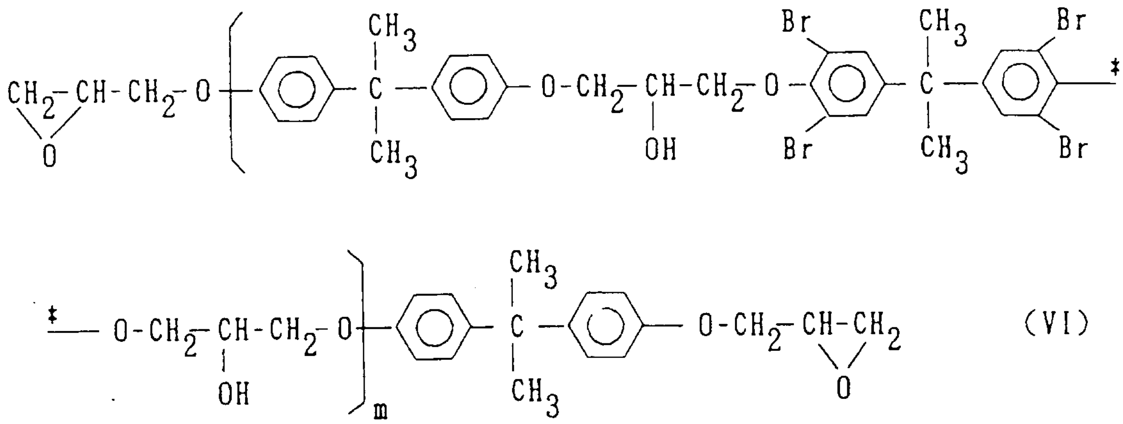

(VI)

(wherein m is a number of 0.1-5 in average value)

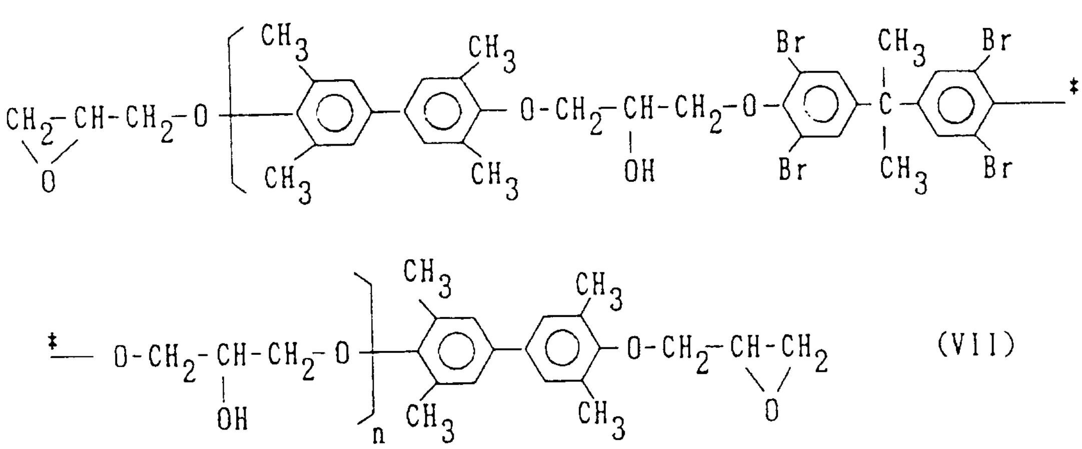

(VII)

(wherein n is a number of 0.1-5 in average value)

A polyepoxy compound obtained by reacting, for example, bisphenol A as a bifunctional phenol compound with epihalohydrin according to the above-mentioned production process (2) is a compound represented by the following formula (VIII), and this polyepoxy compound also contains the secondary hydroxyl group.

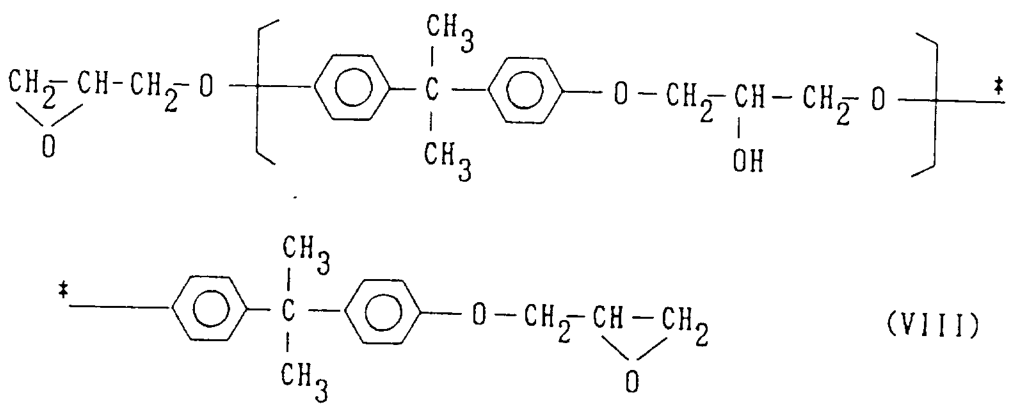

(VIII)

(wherein p is a number of 0.1-5 in average value)

Thus, the polyepoxy compound obtained by various production processes of the polyepoxy compound, such as the above-mentioned production process (1) or (2), contains one or more secondary hydroxyl group although some differences may exist. When the polyepoxy compound containing such a secondary hydroxyl group is used as an epoxy resin or the like, the secondary hydroxyl group remains in the cured resin, resulting in remarkable deterioration of moisture resistante of the cured resin.

It has now been found that in a polyepoxy compound having such a secondary hydroxyl group, if the compound is treated with an appropriate etherifying agent to etherify the secondary hydroxyl group, the moisture resistance of the cured resin is markedly improved. Therefore, in the present invention, the secondary hydroxyl group of the polyepoxy compound having the secondary hydroxyl group is etherified to improve the cured product properties.

The polyepoxy compounds produced by the above-mentioned processes (1) and (2) are prefered as the polyepoxy compound having the secondary hydroxyl group to be etherified in the present invention, but other polyepoxy compounds can be used. For example, various polyepoxy compounds having the secondary hydroxyl group such as a polyepoxy compound obtained by the reaction of a polyhydric phenol compound other than the bifunctional compound or an amine compound and ephihalohydrin, or a polyepoxy compound obtained by a polyhydric phenol compound other than the bifunctional phenol type epoxy compound and various polyhydric phenol compounds including the bifunctional phenol compound represented by any of the abovementioned general formulae (I) to (V) can be used as the polyepoxy compound to be etherified.

In general, if a compound having a small amount of the secondary hydroxyl group, is etherified, the effects of improvement on moisture resistance and the like are not substantially obtained. Therefore, the polyepoxy compound purposed for etherification in the present invention is a polyepoxy compound having the secondary hydroxyl group content of 0.3 or more in average, and preferably 1 to 30 in average, in one molecule. Any alkyl group, or any group containing an alkyl group, e.g. alkoxy mentioned in this specification usually contains 1 to 20 carbon atoms, preferably 1 to 12 carbon atoms more preferably 1 to 6 carbon atoms.

The etherification method of the polyepoxy compound having the secondary hydroxyl group is a method in which a compound represented by the general formula M-Y wherein M represents a hydrocarbon group having 1 to 10 carbon atoms, capable of containing a substituent (with proviso that a group having an active hydrogen and an epoxy group are excluded), and Y represents a halogen atom, a diazo group, an alkylsulfonic acid group, an arylsulfonic acid group or an alkanecarboxylic acid group, or a compound represented by the general formula M-Z-M' wherein M and M' each represents a hydrocarbon group having 1 to 10 carbon atoms, capable of containing a substituent (with proviso that a group having an active hydrogen and an epoxy group are excluded), and Z represents $-S(O_4)-$ or $-OC(=O)O-$, is used as an etherifying agent, and the polyepoxy compound having the secondary hydroxyl group and those etherifying agents are reacted to etherify the secondary hydroxyl group.

Specific examples of the etherifying agent represented by the above-mentioned general formulae M-Y are halogenated alkyls such as methyl iodide, methyl bromide, methyl chloride, ethyl iodide, ethyl bromide, propyl bromide, isopropyl bromide, butyl bromide, t-butyl bromide, hexyl bromide, cyclohexyl bromide, benzyl chloride or allyl chloride; halogen-substituted ethers or ketones such as chloromethylmethyl ether, chloromethylethyl ether or phenacyl bromide; sulfonic acid esters such as methyl methanesulfonate, methyl p-toluenesulfonate, methyl p-bromobenzenesulfonate, methyl trifluoromethanesulfonate, methyl pnitrobenzenesulfonate or ethyl p-toluenesulfonte; diazo compounds such as diazo methane; and carboxylic acid esters such as methyl acetate.

Specific examples of the etherifying agent represented by the above-mentioned general formula M-Z-M' are dialkyl sulfates such as dimethyl sulfate or diethyl sulfate; and dialkyl carbonates such as diethyl carbonate.

The amount of those etherifying agents used is an amount corresponding to 1 to 10 equivalents per 1 equivalent of the secondary hydroxyl group to be etherified in the secondary hydroxyl groups contained in the polyepoxy compound.

The etherification reaction (modification reaction) by the above-mentioned etherifying agent of the polyepoxy compound having the secondary hydroxyl group, that is, the production reaction of the modified polyepoxy compound of the present invention, can be conducted without solvent or can be conducted in a solvent. Further, the reaction can be conducted in the presence of an alkaline substance and/or a catalyst.

The reaction solvents are a hydrocarbon solvent such as benzene, toluene, xylene, hexane or cyclohexane; a ketone type solvent such as acetone, methyl ethyl ketone, methyl isobutyl ketone or cyclohexanone; an ether type solvent such as dimethyl ether, diphenyl ether, tetrahydrofuran or 1,4-dioxane; a chlorine type hydrocarbon solvent such as carbon tetrachloride; and an aportic polar solvent such as dimethyl sulfoxide, dimethyl formamide or 1,3-dimethyl-2-imidazolidinone.

Examples of the above-mentioned alkaline substance are alkali metal hydroxides such as sodium hydroxide or potassium hydroxide; inorganic alkaline substances such as sodium carbonate, potassium carbonate or metallic sodium; organic alkaline compounds such as sodium ethylate, potassium-t-butoxide, triethylene diamine, pyridine, dimethylaminopyridine, benzyldimethylamine, 1,8-diazabicyclo[5,4,0]-7-undecene or various imidazoles; and the like. The amount of those alkaline substances used is an amount corresponding to 1 to 1.3 equivalents per 1 equivalent of the secondary hydroxyl group to be etherified. Those alkaline substances may be directly added to a reaction system, or may be added as a solution.

Examples of the above-mentioned catalyst are inorganic salts such as potassium iodide, quaternary ammonium salt, and phosphonium salt. The amount of the catalyst used is an amount corresponding to 0.001 to 0.1 equivalent per 1 equivalent of the secondary hydroxyl group to be etherified in the secondary hydroxyl groups of the polyepoxy compound.

Further the temperature of the etherification reaction is generally within the range of 10 to 200 °C, and an appropriate temperature is selected according to reactivity, heat stability or the like of the etherifying agent. If the reaction temperature rises more than the boiling point of the compound and solvent used, it is necessary to conduct the reaction using a pressure vessel under pressure. If the reaction temperature exceeds 200 °C, side reactions occur much, and this is not desirable.

After completion of the etherification reaction, the solvent, excess etherifying agent and the like are recovered by distillation under reduced pressure, and the resin produced is washed with water directly or after dissolving in an organic solvent, thereby removing by-products and excess alkaline substances. Examples of the organic solvent used are benzene, toluene, xylene, methyl isobutyl ketone, and the like. The modified polyepoxy compound thus obtained may be directly used for an epoxy resin, or may be used by washing with an alkali metal hydroxide aqueous solution to dehydrohalogenate.

The extent to conduct etherification (degree of etherification) of the polyepoxy compound having the secondary hydroxyl group in the present invention is that 10% or more, preferably 30% or more, and more preferably 50% or more, of the secondary hydroxyl groups contained in the polyepoxy compound are etherified. If the degree of etherification is small, the effect of the present invention based on the etherification is not substantially obtained.

Since the moisture resistance is markedly improved by etherification of the secondary hydroxyl groups contained, the modified polyepoxy compound of the present invention thus obtained can give a cured resin having an excellent moisture resistance when it is used as an epoxy resin, and can advantageously used in many use fields of the epoxy resin.

The epoxy resin composition of the present invention is an epoxy resin composition containing at least an epoxy resin and a curing agent, wherein the modified polyepoxy compound of the present invention in which the alcoholic secondary hydroxyl group contained in the molecule is etherified is used as the epoxy resin. Since the secondary hydroxyl groups in the modified polyepoxy compound are etherified, the epoxy

resin composition of the present invention can give a cured resin having particularly excellent moisture resistance, and can advantageously be used in the fields of a coating composition, a powder coating composition, a molding material, a casting material, a laminating material, a composite material, an adhesive, encapsulating material and the like, and in particular as an epoxy resin material for an encapsulating material.

In the epoxy resin composition of the present invention, other epoxy resins can be used together with the modified polyepoxy compound of the present invention in which the alcoholic secondary hydroxyl groups are etherified, but if the amount of the other epoxy resins having a large content of the alcoholic secondary hydroxyl group used is too large, it leads to deterioration of the moisture resistance of the cured resin. Therefore, it is desirable that the amount of the other epoxy resins used should be within the range which does not markedly lower the moisture resistance.

In the epoxy resin composition of the present invention, various materials can be used as the curing agent therefor. Examples of the curing agent which can be used are aliphatic amines, aromatic amines, heterocyclic amines, polyhydric phenols, Lewis acids such as boron trifluoride, salts of those Lewis acids, imidazoles, organic acids, organic acid anhydrides, amide type compounds, ureas, urea derivatives, and polymercaptans.

Specific examples of the curing agent are aromatic amines such as diaminodiphenyl methane, diaminodiphenyl sulfone or 2,4-diamino-m-xylene; imidazoles or imidazole derivatives such as 2-methyl imidazole, 2,4,5-triphenyl imidazole or 1-cyanoethyl-2-methyl imidazole; salts of those imidazoles or imidazole derivatives and organic acids; organic carboxylic acids such as fumaric acid, trimellitic acid or hexahydrophthalic acid; organic carboxylic acid anhydrides such as phthalic anhydride, endomethylenetetrahydrophthalic anhydride or hexahydrophtalic anhydride; urea derivatives such as dicyandiamide, melamine or guanamine; aliphatic polyamines such as triethylene tetramine, diethylene triamine, xylene diamine or isophorone diamine; adducts of those and epoxy compounds such as ethylene oxide or propylene oxide, or acrylic compounds such as acrylonitrile or acrylic acid; polyhydric phenol compounds such as phenol novolak or cresol novolak; and the like.

These curing agents may be used alone or in combination of two or more thereof. The amount of the curing agent used preferably is 0.6 to 1.2 equivalent per the epoxy group.

The epoxy resin composition of the present invention can contain various additives such as a curing accelerator, a plasticizer, an organic solvent, a reactive diluent, an extender, a filler, a reinforcing agent, a pigment, a flame retardant, a thickener and a flexibilizer, if necessary.

Examples of the curing accelerator are tertiary amines, imidazoles, phosphine compounds, phenols, metal compounds and the like.

The epoxy resin composition of the present invention can be used for various purposes in various methods. For example, this epoxy resin composition is molded by a casting method or using a transfer moulding machine or the like, if necessary followed by heating and curing, to form a moulding. Further, an appropriate solvent is added to the epoxy resin composition of the present invention to prepare a varnish, a substrate such as a glass fiber, a polyester fiber, a polyamide fiber or a paper is impregnated with the varnish followed by heating and drying to prepare a prepreg and the prepreg is press molded and cured to prepare a laminate moulding. Furthermore, the epoxy resin composition of the present invention can advantageously be used as an encapsulating agent for electrical or electronic devices. In any cases, the cured resin is markedly excellent in the moisture resistance.

In the above-mentioned modified polyepoxy compound of the present invention, if a brominated polyepoxy compound is selected as the polyepoxy compound to be etherified and the alcoholic secondary hydroxyl group of the brominated poly epoxy compound is etherified to prepare a modified brominated polyepoxy compound, the modified brominated polyepoxy compound is flame-retardant and simultaneously is markedly excellent in heat stability. Therefore, the modified brominated polyepoxy compound can advantageously used as a flame retardant for various resins including an epoxy resin.

A particularly excellent compound as the modified brominated polyepoxy compound of this type is a brominated polyepoxy compound obtained by reaction of a polyepoxy compound which does not substantially contain a halogen atom and a polyhydric phenol containing at least one bromine atom directly bonded to an aromatic ring per one molecule, and is characterized by etherifying at least 50% of alcoholic secondary hydroxyl groups contained in the brominated polyepoxy compound to prepare a modified brominated polyepoxy compound (hereinafter referred to as a "specific modified brominated polyepoxy compound") Since this specific modified brominated polyepoxy compound is a markedly excellent in flame retardancy and heat stability, it is markedly excellent as a flame retardant for various resins, particularly an epoxy resin. Therefore, if this specific modified brominated polyepoxy compound of the present invention is used as a flame retardant in an epoxy resin composition, a flame retardant epoxy resin composition

excellent for encapsulation, particularly for semiconductor encapsulation, can be obtained.

That is, the flame retardant epoxy resin composition for semiconductor encapsulation of the present invention is a composition comprising an epoxy resin composition containing an epoxy resin which does not substantially contain a halogen atom, a curing agent for a polyhydric phenol resin, an inorganic filler and a curing accelerator, and blended therewith the above-mentioned specific modified brominated polyepoxy compound as a flame retardant.

A process for producing the above-mentioned specific modified brominated polyepoxy compound is described in more detail below including the meaning of further explaining in detail the representative embodiment of the process for producing the modified polyepoxy compound of the present invention, although there are some overlapping points with the explanation of the process for producing the modified polyepoxy compound of the present invention as mentioned before.

There are various compounds as the polyepoxy compound which does not substantially contain a halogen atom, which is a starting material for producing the specific modified brominated polyepoxy compound of the present invention, and the representative example thereof is a polyepoxy compound obtained by reaction of various multifunctional phenol compounds which do not contain a halogen atom or various amine compounds which do not contain a halogen atom, and an epihalohydrin. Those polyepoxy compounds do not contain a halogen atom other than a slight amount of halogen-containing impurities formed by a side reaction at the production thereof, and the content of the halogen atom based on the impurities is generally 1 wt% or less.

Various mulifunctional phenol compounds which are the starting materials for producing the polyepoxy compound which does not substantially contain a halogen atom, which is the starting material for producing the specific modified brominated polyepoxy compound are, for example, bisphenol A, bisphenol F, resorcin, hydroquinone, biphenol, tetramethyl-biphenol, various polyhydric phenols such as phenol novolak resin, cresol novolak resin, bisphenol A novolak resin, dicyclopentadiene phenol regin, terpene phenol resin, phenol aralkyl resin or naphthol novolak resin, and polyhydric phenol resins obtained by condensation reaction of various phenols and various aldehydes such as hydroxybenzaldehyde, crotonaldehyde or glyoxal. Further, as a starting material, which do not contain a halogen atom, there are various amine compounds such as diaminodiphenyl methane, aminophenol or xylene diamine.

Among the above-mentioned starting various polyepoxy compounds which do not substantially contain a halogen atom, a polyepoxy compound obtained by reaction of at least one phenol compound selected from bisphenol A, bisphenol F, 4,4'-biphenol and 3,3',5,5'-tetramethyl-4,4'-biphenol, and an epihalohydrin is preferred from the standpoints of cured properties and easy availability.

Examples of the polyhydric phenol compound containing at least one bromine atom directly bonded to the aromatic ring, which is another starting material for producing the specific modified brominated polyepoxy compound of the present invention are tetrabromohydroquinone, tetrabromobisphenol A, tetrabromo-bisphenol F, tetrabromo-4,4'-biphenol, brominated phenol novolak resin, and the like. Among them, tetrabromobisphenol A is preferred from the standpoint of cured properties and easy availability.

The proportions of the polyepoxy compound which does not substantially contain a halogen atom and the polyhydric phenol compound having bromine atom used in the reaction are such that the amount of the phenolic hydroxyl groups in the polyhydric phenol compound is 0.1 to 0.8 mol per mole of the epoxy group in the epoxy compound. If the amount of the polyhydric phenol compound is too small, the bromine content in the modified brominated polyepoxy compound which is the finally desired product is decreased, resulting in lowering the flame retardancy-imparting effect. Further, if the amount of the compound used is too large, the viscosity of the modified brominated polyepoxy compound increases, resulting in difficulty to handle.

The reaction between the polyepoxy compound which does not substantially contain a halogen atom and the polyhydric phenol compound containing at least one bromine atom directly bonded to an aromatic ring per one molecule is conducted according to the conventional method. For example, by meltmixing both components and mixing and reacting at a temperature of 100 to 200 °C for 1 to 10 hours in the presence of a catalyst, the desired brominated polyepoxy compound can be obtained.

Examples of the reaction catalyst are imidazoles such as 2-metylimidazole or 2-ethyl-4-methylimidazole; amines such as 2,4,6-tris(dimethylaminomethyl) phenol or benzyldimethyl amine; quaternary ammonium salts such as tetramethylammonium chloride, tetramethylammonium hydroxide or benzyltrimethylammonium bromide; phosphines such as tributylphosphine, triphenyl-phosphine or tris-(dimethoxyphenyl)phosphine; phosphonium salts such as ethyltriphenylphosphonium iodide, ethyltriphenylphosphonium chloride or tetrabutylphosphonium bromide; alkali metal hydroxides such as sodium hydroxide or potassium hydroxide; alkali metal salts such as sodium bicarbonate or lithium chloride. The amount of those reaction catalysts used is 50 to 1,000 ppm per polyepoxy compound.

Further, the reaction may use as a reaction solvent, an inert organic solvent, for example, alcohols such as ethanol or isopropanol; ketones such as acetone, methyl ethyl ketone or methyl isobutyl ketone; aromatic hydrocarbons such as benzene, toluene or xylene; ethers such as dioxane or ethylene glycol dimethyl ether; glycol ethers such as ethylene glycol monomethyl ether, ethylene glycol monoethyl ether or propylene glycol monomethyl ether; and aprotic polar solvents such as dimethylsulfoxide or dimethylformamide.

The brominated polyepoxy compound thus produced is a compound represented by the above-mentioned structural formula (VI) in the case that it is produced by the reaction of, for example, an epoxy resin obtained by the reaction of bisphenol A and an epihalohydrin, and tetrabromobisphenol A. Further, the brominated polyepoxy compound is a compound represented by the above-mentioned structural formula (VII) in the case that it is produced by the reaction of an epoxy resin obtained by the reaction of 3,3',5,5'-tetramethyl-4,4'-biphenol and an epihalohydrin, and tetrabromobisphenol A.

The etherification (modification reaction) which is the second stage reaction in the production of the specific modified brominated polyepoxy compound of the present invention is explained below.

The alcoholic secondary hydroxyl groups formed by the reaction of the epoxy resin and the phenolic hydroxyl group in the production course of the first stage are present in the brominated polyepoxy compound obtained by the first stage reaction as is seen from, for example, the above-mentioned structural formulae (VI) and (VII). The specific modified brominated polyepoxy compound of the present invention can be obtained by etherifying at least 50% of the alcoholic secondary hydroxyl groups.

The etherification method is not particularly limited, but a method which does not change the structure of the brominated polyepoxy compound produced by the first stage reaction, in particular a method which does not change the reactive epoxy groups, is preferred.

As described above, various methods are employed for etherification. For example, the etherification can be conducted by reacting an etherifying agent such as alkyl halides, sulfonic acid esters, diazo compounds, carboxylic acid esters, dialkyl sulfuric acids, or dialkyl carbonates, with the alcoholic secondary hydroxyl groups in the presence of an alkaline compound.

Examples of the alkyl halides are methyl iodide, methyl bromide, ethyl iodide, ethyl bromide, propyl iodide, propyl bromide, butyl iodide, butyl bromide, hexyl bromide, cyclohexyl bromide, benzyl chloride and allyl chloride.

Examples of the sulfonic acid esters are methyl methanesulfonate, methyl p-toluensulfonate, methyl pbromobenzenesulfonate, methyl trifluoromethanesulfonate, methyl p-nitrobenzenesulfonate and ethyl p-toluenesulfonate.

Examples of the diazo compounds are diazomethane and the like, and examples of the carboxylic acid esters are methyl acetate. Further, examples of the dialkyl sulfuric acids are dimethylsulfuric acid and diethylsulfuric acid; and examples of the dialkyl carbonates are dimethyl carbonate and diethyl carbonate.

Examples of the alkaline compound are an alkali metal hydroxide such as sodium hydroxide or potassium hydroxide; and inorganic alkaline compound such as sodium carbonate, potassium carbonate or metallic sodium; an alkali metal alcoholate such as sodium ethylate or potassium-t-butoxide; trimethyl amine; triethyl amine; triethylene diamine; pyridine; dimethyl-aminopyridine; benzyldimethyl amine; 1,8-diazobicyclo[5,4,0]-7-undecene; atd various imidazoles.

Further, the reaction may use a catalyst, for example, a quaternary ammonium salt such as tetramethylammonium chloride or tetraethylammonium bromide; a tertiary amine such as benzyl dimethylamine or 2,4,6-(trisdimethylaminomethyl) phenol; imidazoles such as 2-ethyl-4-methylimidazole or 2-phenyl-imidazole; a phosphonium salt such as ethyltriphenylphosphonium iodide; and phosphines such as triphenylphosphine.

Furthermore, the reaction may use an inert organic solvent, for, example, hydrocarbon solvents such as benzene, toluene, xylene or hexane; ketones such as acetone or methyl ethyl ketone; ethers such as dioxane or ethylene glycol dimethylether; an aprotic polar solvent such as dimethyl-sulfoxide or dimethylformamide.

The degree of etherification of this etherification reaction varies depending on the amount of each reagent used, or each reaction condition such as temperature or time, but it is preferred to be finally 50% or more. If the degree of etherification is low, the heat stability effect of the modified brominated polyepoxy compound is not sufficient.

Further, as the type of the etherification, a methyl etherification, an ethyl etherification, a propyl etherification, a butyl etherification or a benzyl etherification is preferred from the cured properties and the like.

The specific modified brominated polyepoxy compound of the present invention can decrease the polarity near a bromine atom by etherifying the alcoholic secondary hydroxyl group, and as a result,

elimination reaction of the bromine atom can be suppressed and the heat stability can be increased.

The above-mentioned flame retardant epoxy resin composition for semiconductor encapsulation of the present invention is further described in detail below.

There are various resins as the epoxy resin which does not substantially contain a halogen atom in the flame retardant epoxy resin composition for semiconductor encapsulation of the present invention. For example, the same, epoxy resin which does not contain a halogen atom as used in producing the above-mentioned specific modified brominated polyepoxy compound of the present invention can be used. Among them, an epoxy resin produced form biphenol, tetramethylbiphenol, a cresol novolak resin, a bisphenol A novolak resin, a dicyclopentadiene phenol resin, a terpene phenol resin or a naphthol novolak resin, and an epiholohydrin is preferred from the points of curing properties and the like.

Further, the modified polyepoxy compound itself of the present invention in which the above-mentioned secondary hydroxy group is etherified, but which does not substantially contain a halogen atom can also be used as the epoxy resin which does not substantially contain a halogen atom in the flame retardant epoxy resin composition for semiconductor encapsulation of the present invention.

Thus, the specific modified brominated polyepoxy compound of the present invention is compounded as a flame retardant with the flame retardant epoxy resin composition for semiconductor encapsulation of the present invention, but it is preferred that the compounding amount is designed such that the bromine content in all organic components which constitute its resin composition is 1 to 10 wt%. If the proportion of the specific modified brominated polyepoxy compound of the present invention used is too small, a sufficient flame retardancy cannot be obtained.

Further, the flame retardant epoxy resin composition for semiconductor encapsulation of the present invention can contain a polyhydric phenol resin curing agent as a curing agent, and this polyhydric phenol resin curing agent is a resin having at least 2, in average, phenolic hydroxyl groups in one molecule. Specific examples thereof are various phenol resins, for example, various phenol resins such as a phenol novolak resin, a cresol novolak resin, a bisphenol A novolak resin, a biphenol novolak resin, a dicyclopentadiene phenol resin, a terpene phenol resin, a phenol aralkyl resin or a naphthol novolak resin; a polyhydric phenol resin obtained by condensation reaction of various phenols and various aldehydes such as hydroxybenzaldehyde, crotonaldehyde or glyoxal; and the like. The amount of the polyhydric phenol resin curing agent used is such that the amount of the phenolic hydroxyl groups in the polyhydric phenol resin is preferably 0.5 to 2.0 mol, and more preferably 0.7 to 1.2 mol, per mole of the epoxy group in the total epoxy resin components.

Examples of the inorganic filler used in the flame retardant epoxy resin composition for semiconductor encapsulation of the present invention are fused silica, crystalline silica, glass powder, alumina, and zircon. The amount of the inorganic filler used is preferably 50 to 90 wt% based on the whole composition.

Examples of the curing accelerator used in the flame retardant, epoxy resin composition for semiconductor encapsulation of the present invention are imidazoles such as 2-methyl imidazole or 2-ethyl-4-methyl imidazole; amines such as 2,4,6-tris(dimethyl-aminomethyl)phenol or benzyldimethylamine; organic phosphorus compounds such as tributyl phosphine, triphenyl phosphine or tris(dimethoxyphenyl)phosphine.

If necessary, a coupling agent, a plasticizer, a pigment or the like can appropriately be compounded with the flame retardant epoxy resin composition for semiconductor encapsulation of the present invention. Further, antimony trioxide, phosphoric acid and the like can be appropriately compounded as a flame retardant additive.

The flame retardant epoxy resin composition for semiconductor encapsulation of the present invention deceases generation of bromide ion and gives a cured resin having excellent heat resistance and moisture resistance reliability compared with the conventional flame retardant epoxy resin composition for semiconductor encapsulation, and therefore can advantageously be used in the field of semiconductor encapsulation.

The present invention is further described in more detail by reference to the following Examples and Comparative Examples. Examples 1 to 7 are the modified polyepoxy compound of the present invention and its production example, of which Examples 4 to 7 are the specific modified brominated polyepoxy compound of the present invention and its production examples. Comparative Examples 1 and 2 are the brominated epoxy compound and its preparation for the sake of comparison. Examples 8 to 12 are the examples of the epoxy resin composition of the present invention, and Comparative Examples 3 to 4 are the examples of the epoxy resin composition for the sake of comparison. Examples 13 to 18 are the examples of the flame retardant epoxy resin composition for semiconductor encapsulation of the present invention, and Comparative Examples 5 to 9 are the examples of the flame retardant epoxy resin composition for semiconductor encapsulation for the sake of comparison.

Example 1

In 3,000 ml three-necked flask equipped with a thermometer, a stirring device and a reflux condenser, 443g (secondary hydroxyl group 1 equivalent) of Epikote 1001 (a trade name of Yuka Shell Epoxy K.K., bisphenol A type epoxy resin, epoxy equivalent 476g/eq., average number of secondary hydroxyl groups per molecule 2.15) was dissolved in 443g of methyl isobutyl ketone, and 142g of methyl iodide was added thereto at 25 °C. While stirring the resulting mixture at 25 °C, 96g of 50 wt% NAOH aqueous solution was added over 30 minutes to conduct a reaction. After the addition, the temperature was increased to 45 °C to conduct reaction for 5 hours.

After completion of the reaction, 5OOg of water was added, followed by stirring and washing with water to remove excess NAOH, by-produced salts and others, and solvents were distilled off under reduced pressure, thereby obtaining 447g of a modified polyepoxy compound.

This modified polyepoxy compound had an epoxy equivalent of 492g/eq., and a softening point of 53 °C. From the measurement result of H-NMR, especially the area ratio of unmodified secondary hydroxyl groups and methyl groups formed by the etherification reaction 1.12 of the average secondary hydroxyl group number 2.15 in the starting epoxy resin was methyl-etherified.

Examples 2

Reaction was conducted in the same manner as in Example 1 except that 127g of benzyl chloride was used in place of methyl iodide, and 2g of tetramethylammonium chloride was added simultaneously at the addition of benzyl chloride, and the subsequent treatments were followed in the same manners as in Example 1 to obtain 562g of a modified polyepoxy compound.

This modified polyepoxy compound had an epoxy equivalent of 569g/eg. and a softening point of 56 °C, and from the measurement result of H-NMR(solvent $CDCl_3$ standard substance TMS), 1.70 of the average secondary hydroxyl group number 2.15 in the starting epoxy resin was benzyl-etherified.

Example 3

In a 3,000 ml pressure vessel, 443g of the same Epikote 1001 - as used in Example 1, 270g of dimethyl carbonate and 108g of sodium methoxide were charged, and reacted at 200 °C for 2 hours.

After completion of the reaction, 443g of methyl isobutyl ketone was added and dissolved, followed by washing with water, and a solvent and the like were distilled off under reduced pressure to obtain 440g of a modified polyepoxy compound.

This modified polyepoxy compound had an epoxy equivalent of 497g/eq., and a softening point of 55 °C, and from H-NMR measurement result, 1.50 of the average secondary hydroxyl group number 2.15 was methyl-etherified.

Example 4

In a 3,000 ml three-necked flask equipped with a thermometer, a stirring device and a reflux condenser, 44.3g of Epikote 828 (trade name of Yuka Shell Epoxy K.K., bisphenol A type liquid epoxy resin, epoxy equivalent 187g/eq.), 20g of Epikote 18OS70 (trade name of Yuka Shell Epoxy K.K., o-cresol novolak type epoxy resin, epoxy equivalent 209g/e. softening point 74 °C), 35.7g of tetrabromobisphenol A and O.O1g of 2-ethyl-4-methylimidazole as a catalyst were charged, and reacted at 160 °C for 3 hours to obtain the brominated polyepoxy compound. This epoxy resin had an epoxy equivalent of 512g/eq., a bromine content of 21.0 wt%, and an average secondary hydroxyl group number per one molecule of 1.60.

Using 687g (secondary hydroxyl group: 1 equivalent) of the above-obtained brominated polyepoxy compound, etherification reaction was conducted in the same manner as in Example 1 and the post-treatment is conducted in the same method to obtain a specific modified brominated polyepoxy compound. This modified epoxy compound had an epoxy equivalent of 534g/eq., and a softening point of 71 °C, and 1.17 out of 1.60 of the average secondary hydroxyl group in the starting epoxy compound was methyl-etherified.

Examples 5 to 7

In a 3,000 ml three-necked flask equipped with a thermometer, a stirring device and a reflux condenser were charged an epoxy resin ($Q_1$) derived from bisphenol A or an epoxy resin ($Q_2$) derived from

tetramethylbiphenol, as an epoxy resin which does not substantially contain a halogen atom, and tetrabromobisphenol A as a polyhydric phenol compound containing at least 1 bromine atom directly bonded to an aromatic ring per one molecule, in the respective amount shown in Table 1. After elevating the temperature to 130 °C to uniformly dissolve the mixture, 0.5g of 50 wt% tetramethylammonium chloride aqueous solution was added thereto. During this time, the temperature in the system was gradually increased to reach 165 °C. Thereafter, the system was maintained at 165 °C for 3 hours to conduct the reaction.

1,000g of methyl isobutyl ketone was added thereto and uniformly dissolved, and the system was cooled to 40 °C. Methyl iodide or benzyl chloride as an etherifying agent was added in an amount shown in Table 1, and 150g of 48.5 wt% sodium hydroxide aqueous solution was added dropwise over 1 hour. The system was then maintained at 40 °C,for 3 hours to conduct the reaction.

After completion of the reaction, by-produced salts and the like were removed by water washing, and methyl isobutyl ketone was then removed under reduced pressure, thereby obtaining the desired specific modified brominated polyepoxy compound. The degree of etherification, epoxy equivalent and bromine content of the compound were measured, and the results are shown in Table 1.

Comparative Example 1

A brominated epoxy resin was produced by reacting the epoxy resin ($Q_1$) derived from bisphenol A and tetrabromobisphenol A in the same manner as in Example 5 or 6, but this brominated epoxy resin was not etherified and was cooled as it was to obtain a brominated epoxy compound. The epoxy equivalent and bromine content of this corhpound are shown in Table 1.

Comparative Example 2

In the same three-necked flask as used in Examples 4 to 7 were charged an epoxy resin ($Q_2$) derived from tetramethylbiphenol and a brominated polycarbonate oligomer in amounts shown in Table 1. After raising the temperature to 130 °C to uniformly dissolve, 0.5g of a 50 wt% tetramethylammonium chloride aqueous solution was added. During this time, the temperature of the system was gradually raised to reach 165 °C. Thereafter, the system was maintained at 165 °C for 2 hours to conduct the reaction. An epoxy equivalent and a bromine content of the brominated epoxy compound were measured, and the results are shown in Table 1.

Table 1

| | Example 5 | Example 6 | Example 7 | Comparative Example 1 | Comparative Example 2 |
|---|---|---|---|---|---|
| PRODUCTION CONDITIONS: | | | | | |
| Polyepoxy compound which does not contain halogen | $Q_1$ *1 | $Q_1$ *1 | $Q_2$ *2 | $Q_1$ *1 | $Q_2$ *2 |
| Amount of the polyepoxy compound (g) | 500 | 500 | 500 | 500 | 500 |
| Amount of tetrobromobisphenol A (g) | 300 | 300 | 300 | 300 | - |
| Amount of brominated polycarbonate oligomer (g)*3 | - | - | - | - | 250 |
| Etherifying agent | Methyl iodide 350 | Benzyl chloride 310 | Methyl iodide 350 | - | - |
| RESIN PRODUCED: | | | | | |
| Epoxy equivalent | 519 | 540 | 516 | 512 | 330 |
| Degree of etherification (%) *4 | 85 | 72 | 82 | - | - |
| Bromine content (wt%) | 20 | 10 | 22 | 22 | 19 |

**Notes in Table 1**

*1($Q_1$) Epoxy resin derived from bisphenol A (Epikote, trade name of Yuka Shell Epoxy K.K., epoxy equivalent 186)

*2($Q_2$) Epoxy resin derives from tetramethylbiphenol (Epikote YX4000, trade name of Yuka Shell Epoxy K.K., epoxy equivalent 186)

*3 Phenolic hydroxyl group equivalent 1000g/eq.

*4 Calculated from the peak area ratio of HPLC

Examples 8 to 12 and Comparative Examples 3 to 4

As shown in Table 2, each modified polyepoxy compound obtained in Examples 1 to 5, and Epikote 1001 (trade name of Yuka Shell Epoxy K.K.) or the polyepoxy compound obtained in Comparative Example

1 each was dissolved in methyl ethyl ketone to prepare a solution having an epoxy resin concentration of 80 wt% To each of those resin solutions were added dicyandiamide as a curing agent, Epikure EMI24 (trade name of Yuka Shell Epoxy K.K.) as a curing accelerator and methyl cellosolve as a solvent in amounts shown in Table 2 to prepare each epoxy resin varnish.

Each epoxy resin varnish obtained was impregnation-coated on a glass cloth and dried at 130 °C for 5 minutes to obtain the respective prepreg having a non-volatile content in the epoxy resin composition of 45 wt%.

Eight sheets of each prepreg were superposed, 0.33μ copper foil was placed on both surfaces of the resulting laminate, and the resulting assembly was molded at a temperature of 170 °C for 1 hour under a pressure of 40 $kg/cm^2$ to produce the respective copper-clad glass epoxy resin laminate having a thickness of 1.6 mm. The glass transition temperature, water absorption and solder heat resistance after water absorption of each laminate obtained were tested, and the results are shown in Table 2.

Table 2

| | Example 8 | Example 9 | Example 10 | Example 11 | Example 12 | Comparative Example 3 | Comparative Example 4 |
|---|---|---|---|---|---|---|---|
| EPOXY RESIN COMPOSITION (PARTS BY WEIGHT): | | | | | | | |
| Modified polyepoxy compound of Example 1 | 100 | - | - | - | - | - | - |
| Modified polyepoxy compound of Example 2 | - | 100 | - | - | - | - | - |
| Modified polyepoxy compound of Example 3 | - | - | 100 | - | - | - | - |
| Modified polyepoxy compound of Example 4 | - | - | - | - | 100 | - | - |
| Modified polyepoxy compound of Example 5 | - | - | - | 100 | - | - | - |
| Epikote 1001 *1 | - | - | - | - | - | 100 | - |
| Modified polyepoxy compound of Comparative Example 1 | - | - | - | - | - | - | 100 |
| Methyl ethyl ketone | 25 | 25 | 25 | 25 | 25 | 25 | 25 |
| Dicyandiamide | 2.6 | 2.2 | 2.5 | 2.4 | 2.6 | 2.7 | 2.7 |
| Epikure EMI-24 *2 | 0.2 | 0.2 | 0.2 | 0.2 | 0.2 | 0.2 | 0.2 |
| Methyl cellosolve | 50 | 50 | 50 | 50 | 50 | 50 | 50 |
| PROPERTY OF LAMINATE: | | | | | | | |
| Glass transition temperature (°C) *3 | 120 | 118 | 118 | 142 | 128 | 116 | 125 |
| Water absorption (wt%) *4 | 0.40 | 0.28 | 0.36 | 0.37 | 0.35 | 0.86 | 0.82 |
| Solder heat resistance after water absorption *5 | o | o | o | o | o | x | x |

Notes in Table 2

*1 : Trade name of Yuka Shell Epoxy K.K., bisphenol A type epoxy resin, epoxy equivalent 476g/eq.

*2 : Trade name of Yuka Shell Epoxy K.K., 2-ethyl-4-methylimidazole

*3 : Measured at a temperature rising rate of 3°C/min using a thermomechanical measurement apparatus (TMA), and determined from the chart.

*4 : According to JIS C-6481, a copper foil was removed by etching, a test piece having a width of 50±1mm and a length of 50±1mm was prepared, the test piece was subjected to a pressure-cooker test at 120°C for 4 hours under 2 atms, and the water absorption was measured.

*5 : Measured according to JIS C-6481. The test piece was subjected to a pressure-cooker test at 120°C for 4 hours under 2 atoms and then immersed in a solder both at 260°C for 20 seconds. Swelling or peeling of the copper surface and laminate surface was visually examined, and was ranked as follows.

o: No blister and peel-off

△: Slight blister and peel-off

x: Considerable blister and peel-off

As is apparent from Table 2, the epoxy resin compositions in Examples 8 to 12 have low water absorption, excellent moisture resistance and also good solder heat resistance after water absorption compared with the epoxy resin compositions in Comparative Examples 3 to 4.

Examples 13 to 18 and Comparative Examples 5 to 9

Various epoxy resin compositions were prepared using an orthocresol novolak type epoxy resin ($Q_3$) or an epoxy resin ($Q_4$) derived from tetramethylbiphenol, as the epoxy resin which does not substantially contain a halogen atom; each brominated polyepoxy compound obtained in Examples 4 to 7 and Comparative Examples 1 to 2, commercially available brominated phenol novolak epoxy resih ($R_1$) and a phosphorus-containing epoxy resin ($R_2$) as the brominated epoxy resin; a phenol novolak resin as the polyhydric phenol resin curing agent; a silica powder as the inorganic filler; triphenylphosphine as the curing accelerator; antimony trioxide as a flame-retardant additive; carnauba wax as a releasing agent; and an epoxysilane as a surface treating agent (a coupling agent) for a silica powder of the filler as shown in Tables 3 and 4 in the respective amounts as shown in Tables 3 and 4.

After the blend was melt mixed at 80 to 130 °C for 5 minutes using a mixing roll, each molten mixture was taken out in the sheet form, which was then cooled and pulverized to obtain the respective molding materials.

Each moulding material was moulded at a metal mould temperature 180 °C for a molding time 180 seconds using a low pressure transfer molding machine to obtain the respective test pieces, followed by post-curing at 180 °C for 8 hours.

The glass transition temperature, the amount of extractable halogen, the amount of thermally decomposed hydrogen bromide generated, and the flame retardancy of the respective test pieces after post-curing were tested, and the results are shown in Tables 3 and 4.

Table 3

| | Example 13 | Example 14 | Example 15 | Example 16 | Example 17 | Example 18 |
|---|---|---|---|---|---|---|
| EPOXY RESIN COMPOSITION (AMOUNT, PART BY WEIGHT): | | | | | | |
| Epoxy resin | $Q_3$ *11 | $Q_3$ *11 | $Q_3$ *11 | $Q_3$ *11 | $Q_4$ *12 | Example 1 |
| (Amount) | 100 | 100 | 100 | 100 | 100 | 100 |
| Modified brominated polyepoxy compound | Example 4 | Example 5 | Example 6 | Example 7 | Example 5 | Example 5 |
| (Amount) | 29 | 29 | 29 | 29 | 29 | 29 |
| Phenol novolak resin *1 | 57 | 57 | 57 | 58 | 60 | 27 |
| Silica powder *2 | 465 | 465 | 465 | 466 | 470 | 388 |
| Triphenylphosphine *3 | 1 | 1 | 1 | 1 | 1 | 1 |
| Antimony trioxide *4 | 10 | 10 | 10 | 10 | 10 | 10 |
| Carnauba wax *5 | 1 | 1 | 1 | 1 | 1 | 1 |
| Epoxysilane *6 | 1 | 1 | 1 | 1 | 1 | 1 |
| PROPERTY OF CURED RESIN: | | | | | | |
| Glass transition temperature *7 (°C) | 156 | 155 | 152 | 157 | 146 | 126 |
| Amount of extractable halogen *8 $Cl^-$ | 5 | 5 | 6 | 5 | 4 | 5 |
| (PPM) $Br^-$ | 3 | 3 | 6 | 3 | 4 | 4 |
| Amount of hydrogen bromide generated by thermal decompositon *9 (PPM) | 1.3 | 1.3 | 1.2 | 1.3 | 1.1 | 1.3 |
| Flame retardancy *10 | V-0 | V-0 | V-0 | V-0 | V-0 | V-0 |

Table 4

| | Comparative Example 5 | Comparative Example 6 | Comparative Example 7 | Comparative Example 8 | Comparative Example 9 |
|---|---|---|---|---|---|
| EPOXY RESIN COMPOSITION (AMOUNT, PARTS BY WEIGHT) | | | | | |
| Epoxy resin | $Q_3$ *11 | $Q_3$ *11 | $Q_3$ *11 | $Q_3$ *11 | $Q_3$ *11 |
| (Amount) | 100 | 100 | 100 | 100 | 100 |
| Brominated epoxy compound | Comparative Example 1 | $R_1$ *13 | Comparative Example 2 | $R_1$ *14 | - |
| (Amount) | 27 | 15 | 31 | 30 | |
| Phenol novolak resin *1 | 57 | 57 | 61 | 66 | 51 |
| Silica power *2 | 460 | 431 | 478 | 488 | 383 |
| Triphenylphosphine *3 | 1 | 1 | 1 | 1 | 1 |
| Antimony trioxide *4 | 10 | 10 | 10 | 10 | 10 |
| Carnauva wax *5 | 1 | 1 | 1 | 1 | 1 |
| Epoxysilane *6 | 1 | 1 | 1 | 1 | 1 |
| PROPERTY OF CURED RESIN | | | | | |
| Glass transition temperature *7 | 157 | 160 | 158 | 131 | 157 |
| Amount of extactable halogen *8 $Cl^-$ | 5 | 8 | 4 | 6 | 4 |
| (PPM) $Br^-$ | 27 | 112 | 32 | 1 or less | 1 or less |
| Amount of hydrogen bromide generated by thermal decompositon *9 (PPM) | 1.9 | 6.8 | 3.6 | 1 or less | 1 or less |
| Flame retardancy *10 | V-0 | V-0 | V-0 | V-1 | HB |

Notes in Tables 3 and 4

*1 : Product of Gunei Kagaku Co., softening point 25°C, polyhydric phenol resin curing agent
*2 : Trade name of Tatsumori Ltd., RD-8, inorganic filler
*3 : Curing accelerator
*4 : Flame-retardant aid
*5 : Releasing agent
*6 : Trade name of Shin-Etsu Chemical Co., KBM-403, coupling agent
*7 : Determined from a thermal expansion curve using TMA
*8 : After hot water extraction at 180°C for 12 hours, quantitatively determined by ion chromatography analysis.
*9 : Hydrogen bromide gas generated at heating at 200°C for 24 hours was absorbed in aqueous hydrogen peroxide, and quantitatively determined by ion chromatography analysis.
*10: Conducted by a vertical burning test according to UL94 standard.
*11($Q_3$): Orthocresol novolak type epoxy resin (EPIKOTE 180H65, trade name of Yuka Shell Epoxy K.K., epoxy equivalent 201)
*12($Q_1$): Epoxy resin derived from tetramethylbiphenol (EPIKOTE YX4000H, trade name of Yuka Shell Epoxy K.K., epoxy equivalent 193)

*13($R_1$): Brominated phenol novolak type epoxy resin (Bren S, a trade name of Nippon Kayaku Co., epoxy equivalent 285, bromine content 36 wt%)

*14($R_1$): Phosphorus-containing epoxy resin (PPQ-EX, trade name of Hokko Chemical Co., epoxy equivalent 214, phosphorus content 7.3 wt%)

As is apparent from Table 3, the cured resins of the epoxy resin compositions of Examples 13 to 18 using the modified brominated polyepoxy compounds obtained in Examples 4 to 7 as the flame retardant, respectively, have a high glass transition temperature, show a small amount of extractable halogen and a small amount of thermally decomposed hydrogen bromide generated, and have markedly excellent flame retardancy. Thus, since the specific modified brominated polyepoxy compounds obtained in Examples 4 to

7 are excellent as the flame retardant, the epoxy resin compositions of Examples 13 to 18 using the above as the flame retardant give cured resin having excellent flame retardant and also excellent heat resistance and moisture resistance reliability, and it is understood that those are excellent as a resin for semiconductor encapsulation.

On the other hand, according to Table 4, the cured resin of the epoxy resin in Comparative Example 5 using the brominated epoxy compound in Comparative Example 1 as the flame retardant is by no means inferior to the cured resin of the composition in Example 14 in the glass transition temperature and the flame retardancy, but the amount of extractable bromine and the amount of hydrogen bromide generated by thermal decomposition are large, and this is due to that the brominated polyepoxy compound obtained by the reaction was not etherified in Comparative Example 1.

Further, the cured resins in Comparative Examples 6 and 7 show markedly large amounts of extractable bromine and hydrogen bromide generated by thermal decomposition compared with the cured resins in Examples 13 to 18, and it is understood that when such compositions are used for semiconductor encapsulation, moisture resistance reliability and heat resistance reliability are poor.

Furthermore, the cured resin in Comparative Example 8 using the phosphorus-containing epoxy resin as the flame retardant has the poor flame retardancy and the heat resistance compared with the cured resins in Examples 13 to 18, and the cured resin in Comparative Example 9 which did not use the brominated epoxy compound at all has the poor flame retardancy.

The modified polyepoxy compound of the present invention give a cured resin having an excellent moisture resistance due to that the alcoholic secondary hydroxyl groups are etherified. Thus, the invention relates to a modified polyepoxy compound characterized by etherifying an alcoholic secondary hydroxyl group of a polyepoxy compound having the alcoholic secondary hydroxyl group as has been described in the main claim in the molecule. Further, since the specific modified brominated polyepoxy compound of the present invention has markedly excellent flame retardancy and heat stability, it is excellent as a flame retardant for various resins including an epoxy resin, and in particular, the flame retardant epoxy resin composition for semiconductor encapsulation of the present invention using the specific modified brominated polyepoxy compound as the flame retardant has an excellent heat stability, show a small amount of extractable halogen and hydrogen bromide generated by thermal decomposition, and can give a cured resin having an excellent flame retardancy.

## Claims

1. A modified polyepoxy compound obtainable by modification of a polyepoxy compound having in the molecule an alcoholic secondary hydroxyl group represented by the following structural formula

$$-OCH_2-\underset{\displaystyle OH}{\underset{|}{C}}HCH_2-O-,$$

characterized in that the polyepoxy compound has been modified by etherifying the alcoholic secondary hydroxyl group.

2. A modified polyepoxy compound as claimed in claim 1, wherein the polyepoxy compound having the alcoholic secondary hydroxyl group to be etherified is a polyepoxy compound obtained by reacting a bifunctional phenol type epoxy compound and a bifunctional phenol compound, if necessary, in the presence of other polyhydric epoxy compound and/or other polyhydric phenol compound.

3. A modified polyhydric epoxy compound as claimed in claim 1, wherein the polyepoxy compound having the alcoholic secondary hydroxyl group to be etherified is a polyepoxy compound obtained by reacting a bifunctional phenol compound and epihalohydrin, if necessary, in the presence of other polyhydric phenol compound.

4. A modified polyepoxy compound as claimed in claim 2, wherein the bifunctional phenol compound is at least one bifunctional compound selected from the compounds represented by the following general formulae (I) to (V), and the bifunctional phenol type epoxy compound is a bifunctional phenol type epoxy compound obtained by reacting epihalohydrin with at least one bifunctional phenol compound

selected from the compounds represented by the following general formulae (I) to (V).
General formula (I):

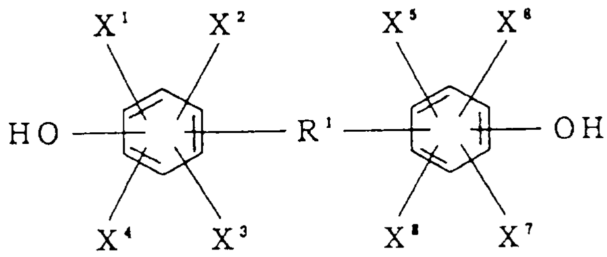

(I)

wherein $X^1$ to $X^8$ each represents hydrogen atom, a hydrocarbon group having 1 to 20 carbon atoms, an alkoxy group, an alloxy group or a halogen atom, and R' represents a direct bond, a hydrocarbon group having 1 to 20 carbon atoms, -O-, -S-, -S-S-, -S(=O)-, -(O=)S(=O)-, -C(=O)-, -C(=O)-O-, -OC-(=O)-O-, (O=)C-C(=O)-, -NHC(=O)- or -NHC(=O)-O-.
General formula (II):

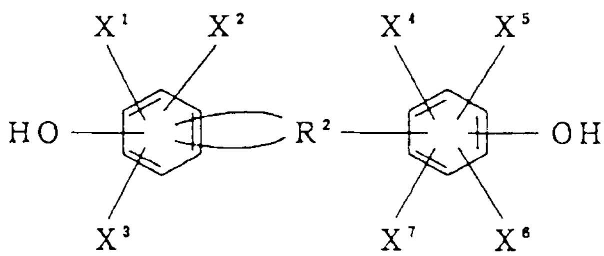

(II)

wherein $X^1$ to $X^7$ each represents hydrogen atom, a hydrocarbon group having 1 to 20 carbon atoms, or alkoxy group, an alloxy group or a halogen atom, and $R^2$ represents a trivalent hydrocarbon group having 1 to 20 carbon atoms or a trivalent hydrocarbon group containing an intermediate ether bond and having a total carbon atom number of 2 to 20.
General Formula (III):

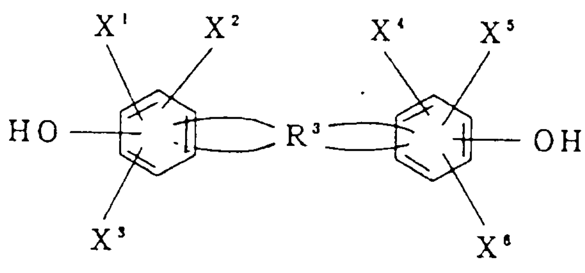

(III)

wherein $X^1$ to $X^8$ each represents hydrogen atom, a hydrocarboft group having 1 to 20 carbon atoms, an alkoxy group, an alloxy group or a halogen atom, and $R^3$ represents a tetravalent hydrocarbon group having 1 to 20 carbon atoms or a tetravalent hydrocarbon group containing an intermediate ether bond and having a total carbon atom number of 2 to 20. General formula (IV):

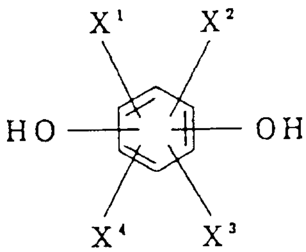

(IV)

wherein $X^1$ to $X^4$ each represents hydrogen atom, a hydrocarbon group having 1 to 20 carbon atoms, an alkoxy group or an alloxy group, a halogen atom.

General formula (V) :

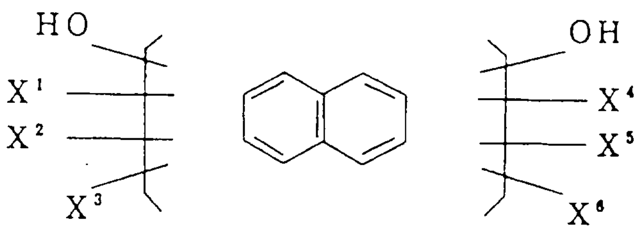

(V)

wherein $X^1$ to $X^6$ each represents hydrogen atom, a hydrocarbon group having 1 to 20 carbon atoms, an alkoxy group alloxy group or a halogen atom.

**5.** A modified polyepoxy compound as claimed in claim 3, wherein the bifunctional phenol compound is at least one bifunctional phenol compound selected from the compounds represented by the general formulae (I) to (V) as defined in claim 4.

**6.** A modified brominated polyepoxy compound obtained by reaction of a polyepoxy compound which does not substantially contain a halogen atom and a polyhydric phenol compound containing at least one bromine atom directly bonded to an aromatic ring, per one molecule, wherein at least 30%, preferably 50%, of alcoholic secondary hydroxyl groups contained in the brominated polyepoxy resin are etherified.

**7.** A modified brominated polyepoxy compound as claimed in claim 6, wherein the polyepoxy compound which does not substantially contain a halogen atom is a polyepoxy compound obtained by a reaction of at least one phenol compound selected from bisphenol A, bisphenol F, 4,4'-biphenol and 3,3',5,5'-tetramethyl-4,4'-biphenol, and an epihalohydrin.

**8.** A modified brominated polyepoxy resin compound as claimed in claim 6, wherein the polyhydric phenol compound containing at least one bromine atom directly bonded to an aromatic ring per one molecule is tetrabromobisphenol A.

**9.** A modified brominated polyhydric epoxy compound as claimed in claim 6, 7 or 8, wherein the etherification is a methyl etherification, an ethyl etherification, a propyl etherification, a butyl etherification or a benzyl etherification.

**10.** A process for producing the modified polyepoxy compound as claimed in any of claims 1 to 9, characterized by reacting a compound represented by the general formula M-Y wherein M represents a hydrocarbon group capable of containing a substituent (with proviso that a group having an active hydrogen and an epoxy group are excluded) and having 1 to 10 carbon atoms, and Y represents a halogen atom, a diazo group, an alkylsulfonic acid group, an arylsulfonic acid group or an alkanecarboxylic acid group, or a compound represented by the general formula M-Z-M' wherein M and M' each represents a hydrocarbon group capable of 1 to 10 carbon atoms containing a substituent (with proviso that a group having an active hydrogen and an epoxy group are excluded), and Z represents $S(O_4)$- or

-OC( = O)-O-, with a polyepoxy compound containing an alcoholic secondary hydroxyl group.

**11.** An epoxy resin composition containing at least an epoxy resin and a curing agent, characterized by using the modified polyepoxy compound as claimed in any of claims 1 to 9 as the epoxy resin.

**12.** A flame retardant epoxy resin composition for semiconductor encapsulation containing an epoxy resin which does not substantially contain a halogen atom, a curing agent for a polyhydric phenol resin, an inorganic filler and a curing accelerator, characterized by further containing the modified brominated polyepoxy compound as claimed in any of claims 6 to 9 as a flame retardant.

**13.** Cured products obtained by curing the compositions as described in claims 11 and 12.

**14.** A modified polyepoxy compound according to any of claims 1 to 5, in which the modified polyepoxy compound is obtained by etherifying an alcoholic secondary hydroxyl group of a polyepoxy compound having the alcoholic secondary hydroxyl group as has been described in claim 1 in the molecule.